(19) Europäisches Patentamt

European Patent Office

Office européen des brevets

(11) Veröffentlichungsnummer : **0 184 022**
**B1**

(12) **EUROPÄISCHE PATENTSCHRIFT**

(45) Veröffentlichungstag der Patentschrift :
07.09.88

(21) Anmeldenummer : 85114250.5

(22) Anmeldetag : 08.11.85

(51) Int. Cl.⁴ : **F 16 B 12/20**

(54) Beschlagteil für eine lösbare Verbindung von Platten.

(30) Priorität : 07.12.84 DE 3444696

(43) Veröffentlichungstag der Anmeldung :
11.06.86 Patentblatt 86/24

(45) Bekanntmachung des Hinweises auf die Patenterteilung : 07.09.88 Patentblatt 88/36

(84) Benannte Vertragsstaaten :
AT BE CH FR GB IT LI LU NL SE

(56) Entgegenhaltungen :
DE-A- 2 855 216
DE-C- 734 489
DE-U- 1 818 909
GB-A- 1 174 319

(73) Patentinhaber : Häfele KG
Postfach 160 Freudenstädter Strasse 74
D-7270 Nagold (DE)

(72) Erfinder : Koch, Gerhard
Bondorfer Weg 28
D-7270 Nagold (DE)

(74) Vertreter : Schmid, Berthold et al
Patentanwälte Dipl.-Ing. B. Schmid Dr. Ing. G. Birn
Falbenhennenstrasse 17
D-7000 Stuttgart 1 (DE)

EP 0 184 022 B1

## Beschreibung

Die Erfindung bezieht sich auf einen Beschlag für eine lösbare Verbindung von zwei im Winkel zueinanderstehenden Platten, insbesondere Möbelplatten. Aus der DE-A-2 855 216 ist bereits ein Beschlag dieser Art bekannt mit einem etwa zylinderförmigen, in der Ausnehmung einer, in der einen Platte festgelegten Halterung drehbar gelagerten, den Kopf eines an der anderen Platte befestigten Spannbolzens aufnehmenden Spannteil. Dabei weist die Halterung an der einen Stirnseite ihrer Ausnehmung eine Abstützfläche für das Spannteil und an ihrer anderen offenen Stirnseite ein nach innen gerichtetes, das Spannteil überragendes Element auf. An dessen Außenumfang sind einander gegenüberliegend zwei Zapfen angeordnet, welche sich in einem größeren Abstand von der Eintrittsöffnung für den Spannbolzen befinden. Wenn bei diesem Beschlag der Spannbolzen sehr stark angespannt wird, tritt eine das Spannteil und die Halterung auseinanderdrückende Kraft auf, welche dazu führen kann, daß der Kopf des Spannbolzens austritt und die Verbindung ungewollt gelöst wird.

Die Aufgabe der vorliegenden Erfindung ist es, ein möglichst einfaches Beschlagteil zu schaffen, wobei die Halterung als zusammenhängendes Teil gestaltet ist, in welcher das Spannteil leicht angesetzt werden kann, und zusätzlich eine Sicherung gegen ein ungewolltes Austreten des Spannbolzenkopfes erreicht wird. Diese Aufgabe wird erfindungsgemäß dadurch gelöst, daß das als Nase od. dgl. ausgebildete Element gegenüber der Durchtrittsöffnung für den Spannbolzen an der Halterung angeordnet ist und das Spannteil mit einer der Nase angepassten Längsnut versehen ist. Durch die Anordnung der Nase an der Halterung, und zwar gegenüber der Durchtrittsöffnung derselben, stützt diese das Spannteil an der Stelle der stärksten Belastung beim Zug des Spannbolzens ab. Dadurch wird ein Auseinanderdrücken der Scheiben des Spannteils und ein Austreten des Spannbolzens bei zu starker Anspannung mit Sicherheit verhindert.

Vorzugsweise ist die Längsnut an der Eintrittsöffnung für den Spannbolzenkopf am Spannteil vorgesehen. Dadurch befindet sich das Spannteil nach dem Einsetzen sofort in der richtigen Stellung für das Einführen des Spannbolzenkopfes, und beim anschließenden Verdrehen zum Anspannen wird dann auch die axiale Lage des Spannteiles gesichert.

Die Zeichnung zeigt ein Ausführungsbeispiel der Erfindung. Es stellen dar :

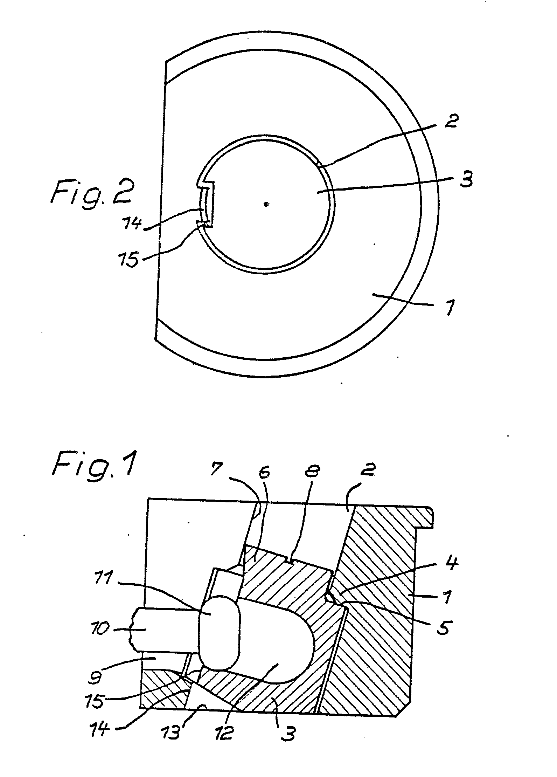

Fig. 1 Einen Querschnitt durch die Halterung mit eingesetztem Spannteil und abgebrochen dargestelltem Spannbolzen,

Fig. 2 eine Draufsicht auf die Halterung mit Spannteil.

In der Ausnehmung 2 der Halterung 1 ist ein etwa zylinderförmiges Spannteil 3 drehbar gelagert. Dabei stützt sich das Spannteil 3 an der einen Stirnseite 4 der Ausnehmung 2 an einer ringförmigen Stützfläche 5 ab. Der Ansatz 6 des Spannteils 3 ragt in eine abgesetzte Verlängerung 7 der Ausnehmung 2 hinein und weist einen Querschlitz 8 zum Ansetzen eines Schraubenziehers auf. In das Spannteil 3 ragt durch die Öffnung 9 der Halterung 1 ein Spannbolzen 10 mit seinem Kopfteil 11 hinein. Das Spannteil 3 weist einen Spannschlitz 12 auf und durch Verdrehen des Spannteils mittels eines Schraubenziehers wird der Spannkopf 11 in das Spannteil hineingezogen. Die Ausnehmung 2 ist an ihrer Stirnseite 13 offen und weist eine nach innen ragende Nase 14 auf, während das Spannteil 3 mit einer den Abmessungen der Nase 14 entsprechende Längsnut 15 versehen ist. Dabei befindet sich die Nase 14 gegenüber der Durchtrittsöffnung 9 der Halterung 1 für den Spannbolzen 10, und die Nut 15 am Spannteil 3 ist an der Eintrittsöffnung für den Spannbolzenkopf 11 vorgesehen.

Zum Einsetzen des Spannteils 3 in die Halterung 1 wird es so weit verdreht, bis die Nase 14 mit der Nut 15 fluchtet. Dann kann man das Spannteil 3 in die Ausnehmung 2 der Halterung 1 einschieben. In dieser Stellung wird dann der Spannbolzen 10 eingesetzt und nach Verdrehen des Spannteils 3 ist dieses in axialer Richtung durch die Nase 14 gesichert.

Die zur Verbindung vorgesehenen Platten sind in der Zeichnung nicht dargestellt. Üblicherweise ist der Spannbolzen 10 an seinem freien Ende als Gewindebolzen gestaltet und in eine Platte eingeschraubt. Für die Halterung 1 dagegen ist eine Bohrung in der anderen Platte vorgesehen, in welche die Halterung 1 so eingeschoben wird, daß der Schraubenschlitz 8 des Spannteils von außen zugänglich ist.

## Patentansprüche

1. Beschlag für eine lösbare Verbindung von zwei im Winkel zueinanderstehenen Platten, insbesondere Möbelplatten, mit einem etwa zylinderförmigen, in der Ausnehmung (2) einer, in der einen Platte festgelegten Halterung drehbar gelagerten, den Kopf (11) eines an der anderen Platten befestigten Spannbolzens (10) aufnehmenden Spannteil (3), wobei die Halterung (1) an der einen Stirnseite (4) ihrer Ausnehmung (2) eine Abstützfläche (5) für das Spannteil (3) und an ihrer anderen offenen Stirnseite (13) ein nach innen gerichtetes, das Spannteil (3) überragendes Element (14) aufweist, dadurch gekennzeichnet, daß das als Nase (14) od. dgl. ausgebildete Element gegenüber einer Durchtrittsöffnung (9) für den Spannbolzen (10) an der Halterung (1) angeordnet ist und das Spannteil (3) mit einer der Nase (14) angepaßten Längsnut (15) versehen ist.

2. Beschlag nach Anspruch 1, dadurch gekennzeichnet, daß die Längsnut (15) an der Eintrittsöffnung für den Spannbolzenkopf (11) an Spannteil (3) vorgesehen ist.

## Claims

1. Fitting for a separable connection of two panels, particularly furniture panels, which are set at an angle to each other and comprising a substantially cylindrical clamping part (3) rotatably mounted in the recess (2) in a support fixed in one panel and accommodating the head (11) of a clamping bolt (10) fixed to the other panel, the support (1) comprising on one end face (4) of its recess (2) a supporting face (5) for the clamping part (3) and on its other open end face (13) an inwardly directed element (14) projecting beyond the clamping part (3), characterised in that the element which is constructed as a nose (14) or the like is disposed on the support (1) opposite an aperture (9) through which passes the clamping bolt (10), and in that the clamping part (3) is provided with a longitudinal groove (15) adapted to the nose (14).

2. Fitting according to Claim 1, characterised in that the longitudinal groove (15) is provided on the clamping part (3) at the aperture through which the clamping bolt head (11) enters.

## Revendications

1. Ferrure pour la solidarisation libérale de deux panneaux, notamment des panneaux de meubles qui sont agencés en cornière l'un par rapport à l'autre, présentant une pièce de blocage (3) sensiblement cylindrique qui est montée rotative dans l'évidement (2) d'un support verrouillé dans l'un des panneaux, et qui reçoit la tête (11) d'un tirant de blocage (10) fixé à l'autre panneau, ledit support (1) comportant, à l'une (4) des faces extrêmes de son évidement (2), une surface d'appui (5) destinée à la pièce de blocage (3) et, à son autre face extrême ouverte (13), un élément (14) dirigé vers l'intérieur et venant emprisonner la pièce de blocage (3), caractérisée par le fait que ledit élément, réalisé sous la forme d'un mentonnet (14) ou organe similaire, est disposé sur le support (1) en vis-à-vis d'un orifice de passage (9) destiné au tirant de blocage (10), et la pièce de blocage (3) est pourvue d'une rainure longitudinale (15) adaptée audit mentonnet (14).

2. Ferrure selon la revendication 1, caractérisée par le fait que la rainure longitudinale (15) est prévue, sur la pièce de blocage (3), au niveau de l'ouverture de pénétration de la tête (11) du tirant de blocage.

Fig. 2

2

3

14

15

1

Fig. 1

7    6    8    2

11

10

9

15

14    13    12    3

4

1

5